Europäisches Patentamt

European Patent Office

Office européen des brevets

(19)

(11) Publication number: **0 136 071**
**B1**

(12) **EUROPEAN PATENT SPECIFICATION**

(45) Date of publication of patent specification: **07.01.88**

(21) Application number: **84305739.9**

(22) Date of filing: **22.08.84**

(51) Int. Cl.⁴: **F 23 R 3/00,** F 02 C 7/30 //
**F23R3/08**

(54) **Varying thickness thermal barrier for combustion turbine baskets.**

(30) Priority: **26.08.83 US 526714**

(43) Date of publication of application:
**03.04.85 Bulletin 85/14**

(45) Publication of the grant of the patent:
**07.01.88 Bulletin 88/01**

(84) Designated Contracting States:
**BE CH DE FR GB LI NL SE**

(56) References cited:
**WO-A-81/01983**
**CH-A- 210 266**
**DE-A-1 626 032**
**FR-A-2 158 572**
**US-A-2 564 497**
**US-A-3 793 861**
**US-A-4 112 676**
**US-A-4 255 495**

**PATENTS ABSTRACTS OF JAPAN, vol. 8, no.
87(M-291)(1524), 20th April 1984
JOURNAL OF AIRCRAFT, vol. 14, no. 5, May
1977, pages 487-493, New York, USA; C.H.
LIEBERT et al.: "Ceramic thermal-barrier
coatings for cooled turbines"**

(73) Proprietor: **WESTINGHOUSE ELECTRIC
CORPORATION
Westinghouse Building Gateway Center
Pittsburgh Pennsylvania 15235 (US)**

(72) Inventor: **Sherlock, Thomas Patrick
21 West Greenwood Avenue
Lansdowne Pennsylvania (US)**

(74) Representative: **van Berlyn, Ronald Gilbert
23, Centre Heights
London, NW3 6JG (GB)**

Courier Press, Leamington Spa, England.

## Description

The present invention relates to a combustion turbine combustor, and more specifically to metallic baskets (combustors) for combustion turbines, and in particular, to a ceramic insulating coating on the interior of such a metallic basket.

Combustion turbines are used in a wide variety of applications, including land based power generation and mechanical drive applications (as examples pipeline pumping) applications, as well as aircraft engines and marine propulsion. The combustion turbine with the combustor is disclosed in US—A—4,112,676. Fuel is supplied at the upstream end, and air (coming from the compressor section) is injected at multiple points, both radially around the cylindrical cross-section of the combustor and at successive locations in a downstream direction.

As combustion of the fuel takes place within the combustor, it can be seen that the combustor liner (metal) is potentially exposed to very high temperature gases and a high radiant heat load. As a result, combustors are one of the portions of the combustion turbine which may require relatively high maintenance.

In US—A—2,564,497 there is described a combustor for a combustion turbine of the type of combustor having a metallic basket with a plurality of air inlets, at least one fuel inlet, and adapted to have combustion in the interior of said basket, said combustor comprising a ceramic coating on the interior surface of said metallic basket.

According to the present invention, a combustion turbine combustor of the type of combustor having a metallic basket with a plurality of air inlets, at least one fuel inlet, and adapted to have combustion in the interior of said basket, said combustor comprising a ceramic coating on the interior surface of said metallic basket, is characterized in that said coating has a longitudinal varying thickness, said thickness being about zero adjacent to said air inlets and increasing in thickness in a downstream direction, with said coating having a void fraction of at least 10%, whereby the temperature of the metallic basket is substantially reduced and the longitudinal temperature variation along the metallic basket is significantly reduced.

Advantageously, it is to be noted that not only high temperatures, but also relatively high temperature difference (between different portions of the combustor), lead to combustor failure. The inlet air provides significant local cooling of the combustor basket near the point of air injection for film cooling the inlet but the combustor basket temperatures rise rapidly downstream from this point.

This invention uses an insulating porous ceramic coating on the interior surface of the basket and utilizes a longitudinally varying ceramic thickness to significantly reduce the longitudinal temperature variation along the metallic basket. Thus the coating has a thickness of near zero adjacent to the air inlets, but becomes thicker in a downstream direction (until the next air inlet, where it is again near zero and then again becomes thicker downstream). The ceramic coating has a void fraction of at least 10% to provide increased thermal insulation.

The invention will now be described, by way of example, with reference to the following drawings, in which:

Figure 1 is a cross-section of a combustion turbine combustor section of the prior art;

Figure 2 is a cross-section of a portion of a combustor of the invention showing the varying thickness ceramic coating; and

Figure 3 is a cross-section of an alternative configuration of this invention showing substantially conical shaped metallic basket portions such that the interior surface of the ceramic coating is generally cylindrical.

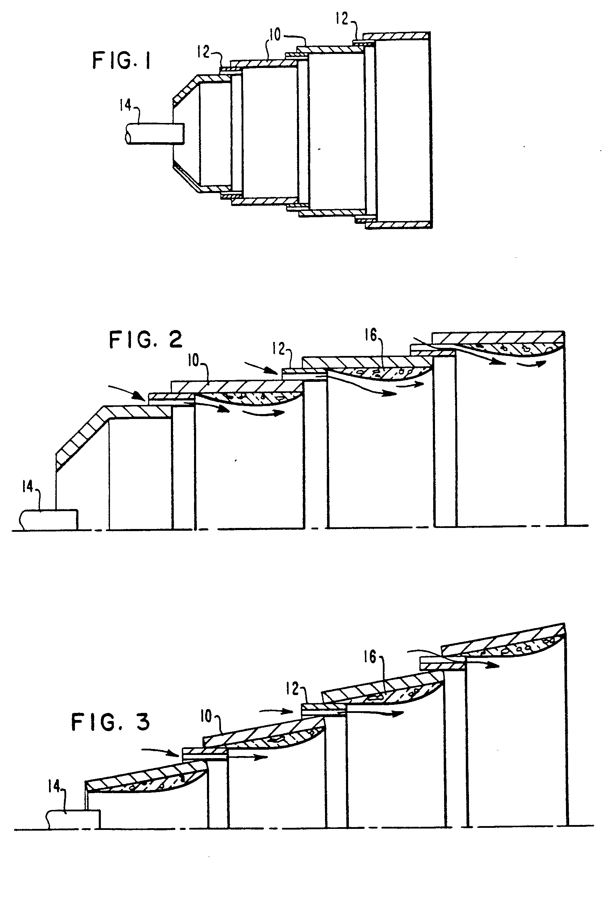

Figure 1 shows a prior art combustor having a series of rings 10 and a series of air inlets 12. The fuel inlet 14 is at the upstream end and the reactant gas flow is generally longitudinal from the upstream end to the downstream end. Each of the rings of such a configuration is relatively hot near the downstream end of the ring, while the upstream end, being cooled by the inlet air, is at a significantly lower temperature (e.g., 538°C (1000°F) as compared to a ring downstream end temperature of about 871°C (1600°F)).

Figure 2 shows a combustor configuration of this invention utilizing an insulating ceramic coating 16 tapering from near zero at the air inlet 12 to, for example, 0.51 mm (20 mils) in thickness near the ring downstream end.

A variety of void containing ceramics can be used, as in the specification of US—A—4,255,495 which lists a variety of thermal insulating ceramics illustrative of ceramics useful in this invention. Preferably such ceramics have a high coefficient of thermal expansion to more nearly match the thermal expansion of the metal in the basket (combustors have been made from a variety of metals, including that known in the trade as Hastalloy).

The thermally insulating ceramic of this invention must have at least 10% by volume of voids and preferably at least 25%. Such coatings can, for example, be applied by plasma spraying. Bond coatings, for example, of the MCrAlY type (NiCrAlY and/or CoCrAlY) can be used between the metallic baskets and the insulating ceramic. Non-porous overcoats can also be used on top of the insulating porous ceramic. Such overcoats will typically be a dense ceramic with no significant porosity to provide a smooth surface for gas flow and to minimize entrapment of for example, reaction products of fuel contaminants. This minimizes corrosion attack caused by contaminant deposits contacting the high temperature structural alloy material.

The key feature of this invention is the varying thickness of porous ceramic which provides more thermal insulation in areas of the metallic basket which otherwise would be at hotter temperatures.

Thus, both peak temperature and differential expansion of the combustor basket is significantly reduced. Ideally, all of the metal of the combustor basket should be at essentially the same temperature, however, the objective is to reduce the temperature differences and they generally need not be completely eliminated.

To provide significant insulation, the porous ceramic generally needs to taper up to a maximum thickness of at least about 0.38 (15) and preferably at least 0.51 mm (20 mils). Typically, the porous ceramic will taper up to a thickness of 0.38—0.76 mm (15—30 mils) and such coatings can be applied to the interior of existing types of combustors without redesign of the metallic baskets. Figure 3 shows a combustor design modified to allow substantially thicker insulating coatings without restricting gas flow. Here the metallic rings 10 are conical sections with the tapered insulating ceramic 16 resulting in an essentially cylindrical interior surface.

Generally, combustors have a series of air inlets spaced longitudinally along the combustor and the insulating ceramic will be near zero thickness adjacent to the air inlets and will increase in thickness in a downstream direction until the next air inlet. The thickness will again be near zero adjacent to this air inlet and again increase in thickness in the downstream direction. Air inlets can, of course, be holes around the periphery or through the openings between increasing diameter cylinders as illustrated in Figure 2 (such cylindrical members are generally spaced apart and supported by corrugated members which allow air to enter through the "corrugations"). With either type of inlet (or combinations thereof), the insulating ceramic is near zero thickness near the inlets where little or no insulation is required (and where thicker ceramic insulation might interfere with airflow). The insulating ceramic becomes thicker in a downstream direction until near the next hole (or, of course, the end of the combustor). As there is cooling adjacent to the air inlets, the insulating ceramic will be tapered just upstream of the air inlets as illustrated in Figure 2.

## Claims

1. A combustion turbine combustor of the type of combustor having a metallic basket with a plurality of air inlets (12), at least one fuel inlet (14), and adapted to have combustion in the interior of said basket, said combustor comprising a ceramic coating (16) on the interior surface of said metallic basket, characterized in that said coating (16) has a longitudinally varying thickness, said thickness being about zero adjacent to said air inlets (12) and increasing in thickness in a downstream direction, with said coating (16) having a void fraction of at least 10%, whereby the temperature of the metallic basket is substantially reduced and the longitudinal temperature variation along the metallic basket is significantly reduced.

2. A combustor as claimed in claim 1, wherein said coating has a maximum thickness of at least 0.51 mm (20 mils).

3. A combustor as claimed in claim 1 or 2, wherein said coating has a void fraction of at least 25%.

4. A combustor as claimed in any of claims 1 to 3, wherein said combustor has at least two air inlets (12) spaced longitudinally and said coating having a thickness of about zero adjacent to the downstream direction until the next air inlet (12) in the downstream direction, said thickness being about zero adjacent to said downstream air inlet (12) and then again increasing in a downstream direction.

5. A combustion turbine, including a combustor having a metallic basket with a plurality of air inlets (12) as claimed in any one of claims 1 to 4.

## Patentansprüche

1. Verbrennungsraum für Verbrennungsturbinen mit einem eine Vielzahl von Lufteinlässen (12) und zumindest einem Treibstoffeinlaß (14) umfassenden Metallkorb, der in seinem Innern für die Durchführung von Verbrennungsvorgängen geeignet ist und dessen innere Oberfläche mit einer keramischen Schicht (16) überzogen ist: dadurch gekennzeichnet, daß die keramische Schicht (16) eine in Längsrichtung sich ändernde Dicke hat, wobei die Schichtdicke im Bereich der Lufteinlässe (12) etwa Null ist und in Strömungsrichtung zunehmend dicker wird, und daß die keramische Schicht (16) einen Porenanteil von zumindest 10% hat, wodurch die Temperatur des Metallkorbes wesentlich abnimmt und die Temperaturänderung in Längsrichtung des Metallkorbes signifikant verringert wird.

2. Verbrennungsraum nach Anspruch 1, dadurch gekennzeichnet, daß die Schicht eine maximale Dicke von zumindest 0,51 mm (20 mils) hat.

3. Verbrennungsraum nach Anspruch 1 oder 2, dadurch gekennzeichnet, daß die Schicht einen Porenanteil von zumindest 25% hat.

4. Verbrennungsraum nach einem der Ansprüche 1—3, dadurch gekennzeichnet, daß der Verbrennungsraum zumindest zwei in Längsrichtung verteilt angeordnet Lufteinlässe (12) aufweist, daß die Schichtdicke im Bereich des Lufteinlaufes (12) etwa Null ist und in Strömungsrichtung zunächst zunimmt, um im Bereich des strömungsabwärts gelegenen Einlaufes (12) wieder auf etwa Null zurückzugehen, und daß die Schichtdicke danach in Strömungsrichtung wieder zunimmt.

5. Verbrennungsturbine mit einem Verbrennungsraum aus einem Metallkorb mit einer Vielzahl von Lufteinlässen (12), entsprechend der Charakterisierung eines der Ansprüche 1—4.

## Revendications

1. Chambre de combustion pour turbine à gaz du type ayant une corbeille métallique avec une pluralité d'entrées d'air (12), au moins une entrée de combustible (14), et étant adaptée pour avoir une combustion à l'intérieur de ladite corbeille, ladite chambre de combustion comportant un revêtement en céramique (16) sur la surface intérieure de ladite corbeille métallique, caractérisé en ce que ledit revêtement (16) a une épaisseur variant longitudinalement, ladite épaisseur étant voisine de zéro au voisinage desdites entrées d'air (12) et augmentant dans la direction de l'écoulement, ledit revêtement (16) ayant un taux de vides de 10% au moins, grâce à quoi la température de la corbeille métallique est substantiellement réduite et la variation de température longitudinale le long de la corbeille métallique est réduite de façon significative.

2. Chambre de combustion selon la revendication 1, dans lequel ledit revêtement a une épaisseur maximale de 0,51 mm (20 mils) au moins.

3. Chambre de combustion selon la revendication 1 ou 2, dans laquelle ledit revêtement a un taux de vides de 25% au moins.

4. Chambre de combustion selon l'une quelconque des revendications 1 à 3, dans laquelle ladite chambre de combustion a au moins deux entrées d'air (12) espacées longitudinalement et dans lequel ledit revêtement a une épaisseur voisine de zéro au voisinage de la direction d'aval jusqu'à l'entrée d'air suivante (12) dans le sens de l'écoulement, ladite épaisseur étant voisine de zéro au voisinage de ladite entrée d'air d'aval (12), et augmentant ensuite dans la direction de l'écoulement.

5. Turbine à combustion, comportant une chambre de combustion ayant une corbeille métallique avec une pluralité d'entrées d'air (12) selon l'une quelconque des revendications 1 à 4.

0 136 071

FIG. 1

FIG. 2

FIG. 3

1